Europäisches Patentamt

European Patent Office

Office européen des brevets

(11) Veröffentlichungsnummer: **0 104 192**
**B1**

(12) **EUROPÄISCHE PATENTSCHRIFT**

(45) Veröffentlichungstag der Patentschrift:
**15.10.86**

(21) Anmeldenummer: **83900926.3**

(22) Anmeldetag: **23.03.83**

(86) Internationale Anmeldenummer:
**PCT/EP 83/00069**

(87) Internationale Veröffentlichungsnummer:
**WO 83/03384 (13.10.83 Gazette 83/24)**

(51) Int. Cl.⁴: **B 32 B  17/10,** C 03 C  27/12,
G 08 B  13/04

(54) **VERFAHREN ZUR HERSTELLUNG EINER MEHRSCHICHTIGEN, DURCHSICHTIGEN SICHERHEITSSCHEIBE.**

(30) Priorität: **24.03.82  DE 8208311 U**

(43) Veröffentlichungstag der Anmeldung:
**04.04.84 Patentblatt 84/14**

(45) Bekanntmachung des Hinweises auf die Patenterteilung:
**15.10.86 Patentblatt 86/42**

(84) Benannte Vertragsstaaten:
**AT BE CH DE FR GB LI LU NL SE**

(56) Entgegenhaltungen:
**EP-A-0 007 857**
**DE-C-658 852**
**GB-A-2 046 897**

(73) Patentinhaber: **HAVERKAMP, Ulrich, Plöniesstrasse
2-4, D-4400 Münster (DE)**
Patentinhaber: **HAVERKAMP, Bernhard,
Plöniesstrasse 2-4, D-4400 Münster (DE)**

(72) Erfinder: **HAVERKAMP, Ulrich, Plöniesstrasse 2-4,
D-4400 Münster (DE)**
Erfinder: **HAVERKAMP, Bernhard, Plöniesstrasse
2-4, D-4400 Münster (DE)**

(74) Vertreter: **Patentanwälte Schulze Horn und
Hoffmeister, Goldstrasse 36, D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung einer mehrschichtigen, durchsichtigen Sicherheitsscheibe, bei der eine Scheibe als Basisschicht mit einer aus einer Sandwich-Folie bestehenden Sicherheitsfolie als zweite Schicht verbunden wird, die aus einer transparenter Trägerfolie und einer transparenten Abdeckfolie besteht, wobei zwischen diesen beiden Folien drahtartige Leiter, die im wesentlichen über die gesamte Breite der Schicht laufen, parallel im Abstand zueinander liegen und die als Leiterschleifen für einen Alarmschaltkreis dienen können, eingebettet sind, wobei zur Bildung eines mäandrierenden, durchgehenden Leitungsstranges Leiter paarweise auf wenigstens einer Kante der zweiten Schicht verbunden werden.

Ein solches Verfahren ist der US-A-42 28 425 entnehmbar. Das bekannte Verfahren geht aus von einer Basisschicht, die im wesentlichen aus zwei Floatglass-Platten mit Zwischenschicht besteht. Die zweite, leitertragende Schicht besteht aus mit Drähten versehenen Silikatglas. Die beiden Schichten werden durch eine dünne Folienschicht verbunden. Herausstehende Drähte werden nachträglich durch bekannte Verbindungsteile leitend miteinander verbunden.

Nachteilig für ein nachträgliches Versehen von Fensterscheiben, die dann die Basisschicht bilden, mit einem durchsichtigen Werkstoff, der drahtartige Leiter aufweist, ist es, daß es bei Drahtglas praktisch unmöglich ist, einen Teil des Glases zu entfernen und seitlich Drahtstücke herauszuholen. Offensichtlich muß daher schon bei der Herstellung dafür gesorgt werden, daß Drahtstücke fransenartig herausstehen. Das bedeutet aber, daß die Sicherheitsscheibe bereits als Ganzes aus Basisschicht und zweiter Scheibe zusammengefügt, zumindest aber fertig abgemessen vorliegen muß. Ein Ausbau einer vorhandenen Scheibe erscheint daher unumgänglich. Diese Voraussetzungen schränken den nnwendungsbereich des bekannten Verfahrens stark ein.

Es ist weiterhin bekannt (DE-A 658 852), mehrschichtiges splittersicheres Glas mit Drahteinlagen herzustellen, indem parallel und in Mäanderführung zwischen Rahmen gespannte Drähte in eine Folie gepreßt und die die eingepreßten Drähte enthaltende Folie mit den Glasscheiben verklebt wird. Zwar erhält man mit diesem Verfahren eine durchgehende Leiterschleife auf oder in einer Folie; Folie und Leiterschleife sind jedoch auf eine bestimmte Größe festgelegt und können daher nicht dazu dienen, vorhandene Fenster verschiedener Formate nachträglich mit einer Sicherheitsfolie zu versehen.

In ähnlicher Weise ist bekannt (EP-A 0 007 857), Alarmglasscheiben herzustellen, in dem ein monolithisches, relativ starres Tragelement, vorzugsweise aus Glas, mit einem thermoplastischem, durchsichtigen Material belegt wird, das in sich in Mäanderführung gelegte Metall-Drähte trägt. Als weitere Schicht wird den genannten beiden Schichten eine dünne Kunststoffolie aufgelegt, so daß die drahttragende Folie zwischen einer Glas- und einer Kunststoff-Schicht eingebettet ist. Bei diesem bekannten Verfahren handelt es sich um die fabrikmäßige Herstellung fertig abgemessener Scheiben, nicht jedoch um das nachträgliche Versehen von vorhandenen Scheiben mit einer Sicherheitsfolie.

Außerdem sei auf die GB-A 2 046 897 (insbesondere Figur 4) verwiesen. Hier wird eine Sicherheits- und Alarmscheibe beschrieben, die mit einer Reihe U-förmig eingelegter Glasfaser-Stränge versehen ist, die an ihren offenen Enden jeweils Sender oder Empfänger von Lichtquellen aufweisen. Bei Unterbrechung des Lichtstrahles durch Zerbrechen der Scheibe und Beschädigen der Glasfaser-Stränge kommt es zu einer Signal-Auslösung. Die Konstruktion ist darauf abgestimmt, daß eine Vielzahl von Sendern und Empfängern, nicht jedoch eine durchgehende optische Leiterschleife geschaffen wird. Der Zusammenbau erfolgt außerdem nicht nachträglich, sondern vor dem Einbau der Scheiben fabrikmäßig, da die glasfasertragende Folie zwischen zwei Glasscheiben einzubetten ist.

Der Erfindung liegt die Aufgabe zugrunde, es bei einem Verfahren zur Herstellung einer mehrschichtigen, durchsichtigen Sicherheitsscheibe in einfacher Weise möglich zu machen, vorhandene Fensterscheiben ohne Ausbau derselben mit einer zweiten Schicht aus transparentem, flächenförmigen Werkstoff zu versehen und diese damit in eine durchsichtige Sicherheitsscheibe umzuwandeln.

Diese Aufgabe wird bei einem Verfahren der eingangs genannten Art durch folgende Verfahrensschritte gelöst:

a) aus der Sicherheitsfolie wird ein zur Geometrie der Glasscheibe passendes Stück geschnitten;

b) an der oder den Schnittkante(n), an der oder an denen Leiter mit freiem Querschnitt enden, wird die Folie bis zu einer Entfernung von etwa 2 cm von der Schnittkante offengelegt, so daß die Leiter freigelegt werden und eine Reihe von Drahtenden fransenartig über den Rand oder die Ränder der Folie übersteht;

c) nach Verbinden der Leiterpaare wird die zweite Schicht mit einem Kleber auf die Basisschicht aufgeklebt.

Vorzugsweise werden zu der Herstellung einer Verbindung die Leiter paarweise im Bereich der Außenseite des Werkstoffes angeordnete, leitende Querstege miteinander verbunden.

Damit wird anders als beim bekannten Verfahren bei der Durchführung des neuen Verfahrens von einer Folie als Zwischenprodukt ausgegangen, die als "Endlosbahn" angeliefert wird und mit der zu schützende Fensterflächen von außen oder innen versehen, vorzugsweise beklebt, werden können. Derartige Folien sind vorzugsweise sehr zähe und reißfest aus einem Kunststoff-Material herzustellen, das auch dann nicht zerreißt, wenn die Glasscheibe selbst durch Gewalteinwirkung zerstört wird. Derartige Folien verhindern überdies, daß Glassplitter in einem solchen Fall herumgeschleudert werden.

Mit Drähten versehene Folien sind, wie erläutert wurde, bekannt. Für den vorliegenden Zweck kann die Montagezeit wesentlich verkürzt werden, wenn jeweils nur auf einer Seite freie, zu verbindende Drahtenden vorhanden sind, so daß ein Trennschnitt nur auf der mit freien Leiterenden versehenen Seite durchgeführt wird.

Unter den eingangs genannten "Querstegen" können verschiedene elektrische Verbindungen verstanden werden, auch solche, wie sie aus dem eingangs genannten Stand der Technik bekannt sind. Es können jedoch auch kurze Drahtstücke verwendet werden, die durch Löten oder auch durch mechanisches Verpressen oder Verbinden mit den Drahtenden leitend verbunden sind.

Vorzugsweise wird die Folie von der Flachseite oder vom Rand her im Bereich der Kante bis zu den Leitern freigelegt. Dabei kann das Freilegen so gaschehen, daß durch eine randseitige Abtrennung eines Streifens auf der gesamten Länge der Kunststoffolie in einer Breite von etwa 0,5 - 1,5 cm erfolgt, der von den Leitern und von der Restfolie einfach abgezogen wird. Dies läßt sich dadurch erzielen, daß durch Erwärmung eine Trennfuge erzeugt wird. Die Vertiefung und Freilegung kann jedoch auch durch einen Schmelzvorgang erzeugt werden, wobei eine randparallele, streifenförmige, über mehr als zwei Leiter reichende Vertiefung erfolgt. Eine solche Vertiefung kann durch einen Lösungs- oder Schmelzvorgang gebildet werden.

Bestehen die Leiter aus Draht, vorzugsweise Kupfer-Draht oder aus einer kupferhaltigen Legierung, so wird für die Querstege nichtisolierter Draht verwendet, der anschließend mit einem Schutzüberzug versehen werden kann. Der Schutzüberzug kann ein dünner, getrockneter Lacküberzug oder auch ein dünnes Folienstück sein, das nachträglich durch Schweißen oder Kleben mit der Trägerfolie verbunden ist.

Der die Leiterschleifen bildende Draht bildet außerdem eine nennenswerte Verstärkung des Folienmaterials gegen das Einreißen oder Einschneiden. Zur Erhöhung der Ansprechempfindlichkeit wird vorgeschlagen, daß gegenüber dem Folienmaterial niedrige Längsausdehnungsstreckgrenze besitzt der verwendeten Leiters.

Ein verbesserter Verstärkungseffekt für den Einsatz der Folie als Sicherheitsfolie bietet sich dann, wenn als Material der Leiter eine optisch leitende Glasfaser bzw. ein Glasfaserbündel verwendet wird. Diese Materialien erzeugen eine erhebliche Verstärkung gegen Einreißen oder Einschneiden. Dabei kann der optisch zu erkennende Weg des Signalträgers (Lichtstrahl) in einfacher Weise optoelektronisch erfaßt werden. Die als leitenden Querstege aufzufassenden Überbrückungselemente sind aus der Glasfaser-Technologie bekannt.

Derartige Querstege können dann seitlich im Bereich der Schnittkante an den jeweiligen Schnittstellen der Glasfasern angebracht werden.

Folien für die genannten Zwecke werden üblicherweise als Mehrschichten-Folien hergestellt, die auch als "Sandwich-Folien" bezeichnet werden. Als Trägermaterial der Folien bzw. der Folienschichten wird vorzugsweise ein Polyesther-Film auf Polyäthylen-Terephtalat-Basis hergestellt. Die Folie hat vorzugsweise eine Stärke, die zwischen 0,05 und 2 mm liegt. Die Draht- bzw. Glasbündel-Dicke liegt zwischen 0,1 und 1,0 mm, wobei von diesen Werten nach unten oder oben bei Sonderzwecken und unüblichen Formaten der zu schützenden Scheibe insgesamt abgewichen werden kann. Anstelle der genannten Polyester-Filme können auch andere, durchsichtige Kunststoffmaterialien Verwendung finden, beispielsweise Polypropylen oder Polyvinylchlorid.

Anhand der Figuren werden die Verfahrensschritte verschiedener Ausführungsbeispiele erläutert. Die Figuren zeigen im einzelnen:

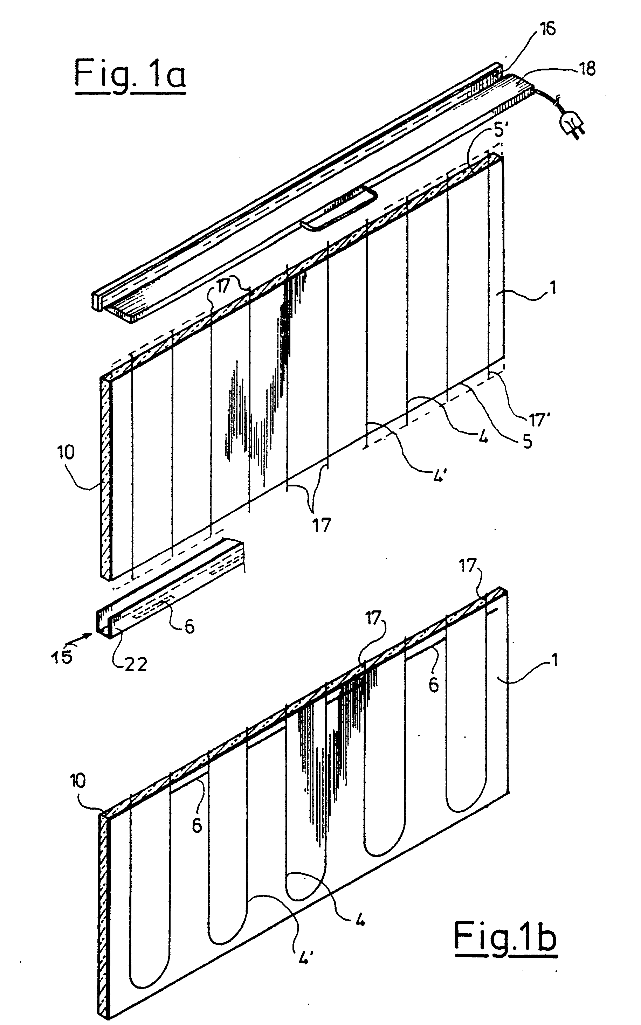

Figur 1 a eine mehrschichtige, durchsichtige Sicherheitsscheibe mit einer Sicherheitsfolie 1;

Figur 1 b eine Darstellung ähnlich wie Figur 1 a, jedoch mit einer anderen Ausführungsform der Sicherheitsfolie;

Figur 2 eine andere Ausführungsform mit einem Detail im Bereich der die Drähte verbindenden Querstege;

Figur 3 eine Ausführungsform mit Glasfaser-Leitern,

Figur 4 eine Ausführungsform mit mäandrierenden Leitern.

**Beispiel 1 (vgl. Figur 1 a und 2)**

Eine gereinigte Glasscheibe 10 aus 3 mm dicken Floatglass mit den Abmessungen Breite = 1 m und Höhe = 2 m soll mit einer Sicherheitsfolie 1 überzogen werden.

Das Folienmaterial für die Sicherheitsfolie 1 wird in aufgerollten Bahnen von 30 m Länge und 1,20 m Breite angeliefert. Das Folienmaterial besteht

- aus einer transparenten Trägerfolie 1' aus einem durchsichtigen Polyester-Film auf Polyterephtalat-Basis mit einer Dicke von 0,1 mm und

- aus einer 0,85 mm dicken, mit der Trägerfolie verklebten (Klebschicht 2) Abdeckfolie 3 und

- aus zwischen den beiden Folien 1' und 3 eingebetteten, leitfähigen Metalldrähten 4, die über die ganze Bahnbreite des Folienmaterials reichen und parallel in Abstand verlaufen. Die Drähte 4 mit einer Dicke von 0,15 mm bestehen aus einer vorwiegend Kupfer enthaltenden leitenden Legierung mit einer gegenüber dem Folienmaterial niedrigeren Längenausdehnungsstreckgrenze, so daß bei Dehnung oder Zerreißen der Folie 1 auch der Draht 4 zerreißt.

Aus dem Folienmaterial wird für die Glasscheibe ein passendes Rechteckstück des Formats Breite = 0,96 m und Höhe = 1,96 m geschnitten. Auf beiden Seiten der Folie liegen damit an der Schnittkante geschnittene Drahtquerschnitte offen.

Mit Hilfe eines elektrisch beheizbaren Schneideisens 18 mit zulaufender Kante wird etwa 2 cm von der Schnittkante der Folie 1 entfernt, und zwar dort, wo die Drähte 4 enden, ein Schmelzschnitt geführt, der einen Folienstreifen 16 abtrennt. Das Drahtmaterial wird dabei nicht durchschnitten, sondern wird beim Abziehen des Folienstreifens 16 freigelegt. Derselbe Verfahrensschritt wird auch auf der gegenüberliegenden Seite der Folie 1 durchgeführt. Damit steht eine Reihe von Drahtenden 17 fransenartig über den Rand der Folie über.

Die Kanten der Folie 1 mit den überstehenden Drahtenden 17 werden durch einen auf Folienlänge zugeschnittenen Kamm 22 abgedeckt, der im Inneren voneinander abgesetzte leitfähige Stege 6 aufweist, die jeweils die Länge des Abstandes zweier Drähte mit entsprechenden Zwischenraum haben, so daß je zwei Drähte 4, 4' paarweise und seitlich alternierend durch die im Bereich der Außenseiten 5, 5' angeordneten Kämme 22 miteinander verbunden sind. Damit ergibt sich ein durchgehender Leiterstrang mit herausstehenden Anschlußenden 17'. Die präparierte Folie wird anschließend mit einem Kleber auf die Glasscheibe 10 aufgeklebt und die Leiterenden 17' mit einem elektrischen Schaltkreis (nicht dargestellt) verbunden.

Die Kämme 22 dienen gleichzeitig als Abdeckleisten 15, die die Schnittkante und die Querstege 6 abdecken.

### Beispiel 2 (vgl Figur 1 b und 2)

Eine gereinigte Türscheibe 10 aus Glas, 10 mm dick, mit den Abmessungen Breite = 1,20 m und Höhe = 2,20 m soll mit einer Sicherheitsfolie 1 überzogen werden.

Das Folienmaterial für die Sicherheitsfolie besteht aus einer Sandwich-Folie, bei der zwischen einer Träger- und einer Abdeck-Folie, jeweils auf Polypropylen-Basis, ein 0,5 mm starker Aluminium-Draht 4, 4' in eine Klebschicht 2 eingebettet ist. Die Aluminium-Drähte 4, 4' sind in parallel liegenden U-förmigen Schleifen verlegt, bei dem nur auf einer Seite der Folie freie Drahtenden 17 vorhanden sind. Auf der gegenüberliegenden Seite ist bereits eine Verbindung zwischen jeweils einem Drähtpaar vorhanden. Das bedeutet, daß ein entsprechender Zuschnitt nur an einer Seite erfolgen muß. Im vorliegenden Falle werden die Drähte 4, 4' zu einem mäandrierend durchgehenden Leitungsstrang miteinander verbunden, indem je zwei, zu einer benachbarten U-Konfiguration gehörenden Drahtenden 17 nachträglich durch im Bereich der Außenseite angeordnete, leitfähige Querstege 6 miteinander verbunden werden, wobei die Querstege aus kurzen, flachen Aluminiumbandstücken bestehen. Sie sind in eine Nut 7 eingebettet, die durch einen Schmelz- oder Lösungsvorgang jeweils zwischen den beiden zu verbindenden Drähten 4, 4' erzeugt wird. Es ist auch möglich, eine derartige Nut über die gesamte erforderliche Länge des Folienmaterials in die Oberfläche einzuschmelzen, um damit die Drähte freizulegen.

Die Querstege 6 werden mit dem Drahtmaterial verlötet. Nach Einlagerung der Querstege und Herstellung einer elektrischen Verbindung, sowie Überprüfung, werden die Verbindungsbereiche mit den Querstegen 6 mit einem Schutzüberzug 12 versehen, der aus dem Material der Folie selbst, im vorliegenden Fall also Polypropylen, besteht, das in gelöster Form aufgebracht wird. Damit hat man ein vollständiges plattenförmiges Element 100, das auf die Scheibe 10 aufgeklebt wird.

Nach Herstellung einer durchgehenden Leiterschleife können die Endpunkte der Drähte 4 wie üblich mit einer elektronischen Überwachungs-Vorrichtung verbunden werden.

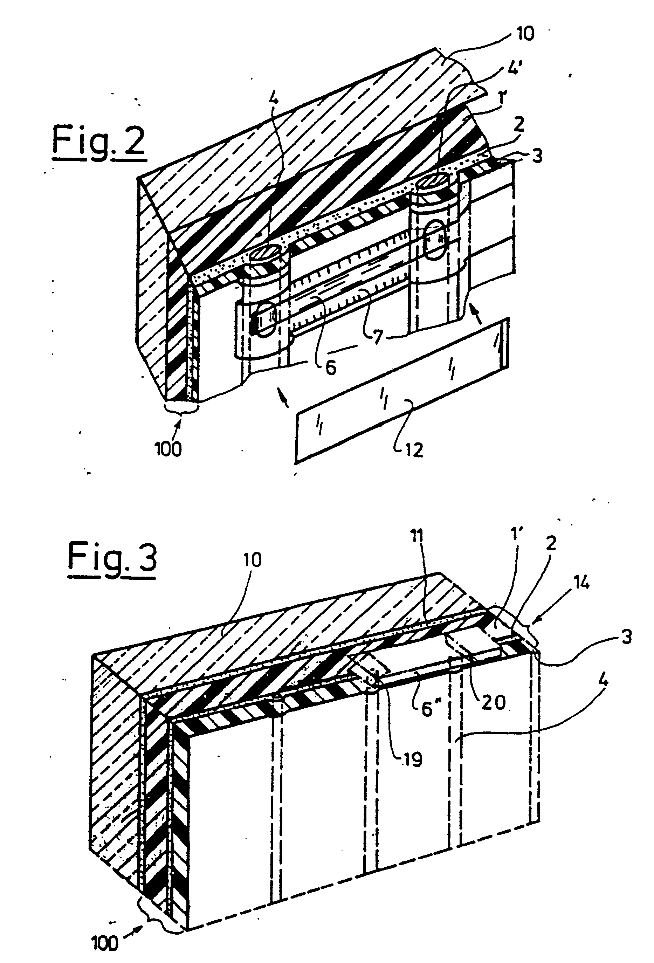

### Beispiel 3 (vgl. Figur 3)

Eine Glasscheibe 10 in quadratischem Format (Seitenlänge 1 m) für einen Schaukasten soll mit einer Sicherheitsfolie 1 versehen werden.

Das Folienmaterial für die Sicherheitsfolie 1 wird in aufgerollten Bahnen von 20 m Länge und 1,30 m Breite angeliefert. Das Folienmaterial besteht
- aus einer transparenten Trägerfolie 1' mit einem durchsichtigen Polyvinylchlorid-Film mit einer Dicke von 0,05 mm
- aus einer 0,05 mm dicken, mit der Trägerfolie verklebten Abdeckfolie 3 aus PVC,
- einer Klebeschicht 2 und
- aus zwischen den beiden Folien eingebetteten, Glasfaserbündeln 4 aus optisch leitendem Glas, die einen Durchmesser von 0,05 mm aufweisen. Die einzelnen Glasfasern sind dabei noch erheblich dünner. Das eingebettete Glasfaserbündel 4 erhöht die Festigkeit des Folienmaterials wesentlich und ist zur Herstellung einer Leiterschleife ebenfalls geeignet.

Nach entsprechendem Zuschnitt der Sicherheitsfolie 1 werden vor die Schnittkante 14 der Folie Querstege 6'' gelegt, die als ein Element gestaltet sind, das zwei innere Spiegelflächen 19, 20 aufweist, die den von einem Strang ankommenden Lichtstrahl in den nächsten Glasfaserstrang weiterleiten. Die Ausführung des Quersteges 6'' ist nur andeutungsweise dargestellt. Derartige Elemente sind im Handel erhältlich.

Das mit Querstegen 6'' vollständig ausgestattete Element 100 kann mit dem Basiselement, d. h. mit der Glasscheibe 10, verbunden werden.

Nachdem die parallelen Glasfaserbündel 4 zu einem mäandrierenden Leiterstrang in beschriebener Weise miteinander verbunden sind, können die losen Enden des Glasfaserbündels mit einer entsprechenden optischen Lichteingabe und -ausgabe verbunden werden, an die sich ein bekannter Überwachungskreis anschließt.

Die Kanten selbst werden zusätzlich noch mit einer durchsichtigen Abdeckleiste versehen, die das Material vor Beschädigungen und Staubeinfluß schützt. Anschließend wird die Sicherheitsfolie 1 auf die Scheibe 10 mittels Klebschicht 11 aufgeklebt.

Die aufgeklebte Sicherheitsfolie 1 erfüllt einen doppelten Zweck. Einmal trägt sie zur Verstärkung und zum Zusammenhalten des Glases bei. Zum anderen erlaubt sie eine Verbindung mit einem elektronischen Überwachungskreis, der die Unterbrechung des Leitungsstranges sofort meldet und einen Alarm auslöst.

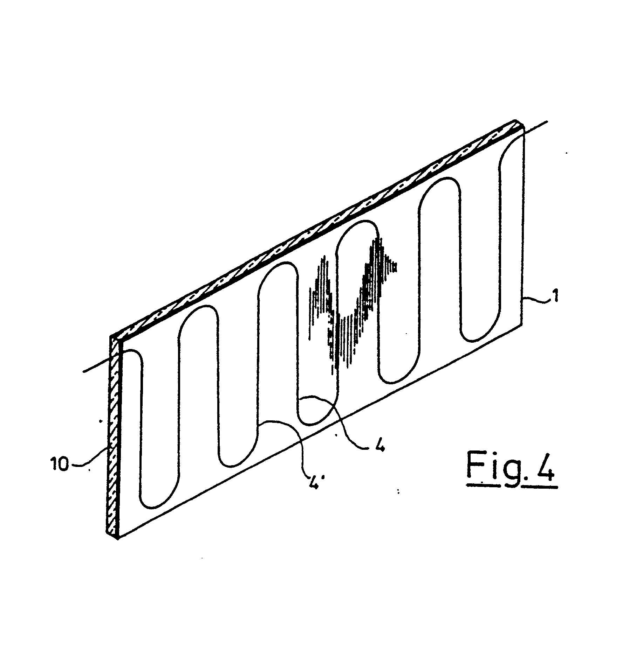

**Beispiel 4 (vgl. Figur 4)**

Eine schmale Kellerfensterscheibe 10 aus Glas mit 80 cm Höhe und 2 m Breite soll mit einer Sicherheitsfolie überzogen werden. Hierzu steht eine standardisierte, schmale Sicherheitsfolie 1 zur Verfügung, die mit einem mäandrierten Draht aus 0,3 mm starker Kupferlitze überzogen ist. Der Abstand der Mäander ist jeweils 3,5 cm. Die Folie wird nur an ihren Stirnseiten geschnitten; die herausführenden Drähte werden direkt mit einer Alarmanlage verbunden.

**Patentansprüche**

1. Verfahren zur Herstellung einer mehrschichtigen, durchsichtigen Sicherheitsscheibe, bei der eine Scheibe (10) als Basisschicht mit einer aus einer Sandwich-Folie bestehenden Sicherheitsfolie (1) als zweite Schicht verbunden wird, die aus einer transparenten Trägerfolie (1') und einer transparenten Abdeckfolie (3) besteht, wobei zwischen diesen beiden Folien (1'; 3) drahtartige Leiter (4, 4'), die im wesentlichen über die gesamte Breite der Schicht laufen, parallel im Abstand zueinander liegen und die als Leiterschleifen für einen Alarmschaltkreis dienen können, eingebettet sind, wobei zur Bildung eines mäandrierenden, durchgehenden Leitungsstranges Leiter paarweise auf wenigstens einer Kante der zweiten Schicht verbunden werden, gekennzeichnet durch folgende Verfahrensschritte:

a) aus der Sicherheitsfolie (1) wird ein zur Geometrie der Glasscheibe (10) passendes Stück geschnitten;

b) an der oder den Schnittkante(n), an der oder an denen Leiter (4, 4') mit freiem Querschnitt enden, wird die Folie bis zu einer Entfernung von etwa 2 cm von der Schnittkante offengelegt, so daß die Leiter (4, 4') freigelegt werden und eine Reihe von Drahtenden (17) fransenartig über den Rand oder die Ränder der Folie übersteht;

c) nach Verbinden der Leiterpaare wird die zweite Schicht mit einem Kleber auf die Basisschicht aufgeklebt.

2. Verfahren nach Anspruch 1, dadurch gekennzeichnet, daß die Leiter (4, 4') paarweise durch im Bereich der Außenseite angeordnete, leitende Querstege (6, 6', 6'') verbunden werden.

3. Verfahren nach Anspruch 1, dadurch gekennzeichnet, daß die Offenlegung der Leiter (4, 4') entlang einer randparallelen, streifenförmigen Vertiefung (7) erfolgt.

4. Verfahren nach Anspruch 1 oder 2, dadurch gekennzeichnet, daß die Offenlegung der Vertiefung (7) durch einen Lösungs- oder Schmelzvorgang erfolgt.

5. Verfahren nach Anspruch 2, dadurch gekennzeichnet, daß die Querstege (6, 6', 6'') mit einem Schutzüberzug (12) versehen werden.

6. Verfahren nach Anspruch 1, dadurch gekennzeichnet, daß als Material der Leiter (4, 4') Kupfer oder eine kupferhaltige Legierung verwendet wird.

7. Verfahren nach Anspruch 1, dadurch gekennzeichnet, daß als Material der Leiter (4, 4') eine optisch leitende Glasfaser bzw. ein Glasfaserbündel verwendet wird.

8. Verfahren nach Anspruch 7, dadurch gekennzeichnet, daß die geschnittenen, offenen Glasfaserenden nach Offenlegung mit vor der Schnittkante (14) der Folie liegenden, optisch leitenden Querstegen versehen werden.

9. Verfahren nach Anspruch 1, dadurch gekennzeichnet, daß die Trägerfolie (1') der Folie (1) als Polyesterfilm auf Polyäthylen-Terephthalat-Basis hergestellt wird, die eine Stärke zwischen 0,05 und 2 mm aufweist.

10. Verfahren nach einem der Ansprüche 1, 6 oder 7, dadurch gekennzeichnet, daß der Leiter (4, 4') eine gegenüber der Trägerfolie (1') niedrigere Längsausdehnungsstreckgrenze besitzt.

11. Verfahren nach einem der vorhergehenden Ansprüche, dadurch gekennzeichnet, daß die Schnittkante (14) und gegebenenfalls vorhandene Querstege auf wenigstens einem Teil der Schnittkante mit Abdeckleisten (15) abgedeckt werden.

**Claims**

1. Process of producing a laminated clear security pane, wherein a pane (10) as a base layer is combined and joined with a security sheet (1) comprising a sandwich sheet as a second layer consisting of a transparent substrate film (1') and a transparent cover sheet (3), with wire-like conductors (4, 4') extending substantially across the full width of the layer being embedded between these two sheets (1'; 3), spaced in parallel with each other and adapted to act as conductor loops of an alarm circuit, and wherein, to form a meandering continuous wire strand, conductors are connected in pairs on at least one edge of the second layer, characterized by the following process steps:

a) cutting from the security sheet (1) a portion conformed to the geometry of the glass pane (10);

b) peeling open, on the cutting edge or edges where conductors (4, 4') terminate with a free cross-section, the sheet up to a distance of about 2 cm from the cutting edge, thereby to expose the conductors (4, 4') with a row of wire ends (17) extending, like fringes, beyond the edge or edges of the sheet;

c) upon connecting of the conductor pairs, adhering the second layer to be base layer by means of an adhesive.

2. The process according to claim 1, characterized in that the conductors (4, 4') are connected in pairs by means of conductive transverse webs (6, 6', 6'') disposed in the region of the outer side.

3. The process according to claim 1, characterized in that the conductors (4, 4') are exposed along a strip-shaped recess (7) in parallel with the edge.

4. The process according to claims 1 or 2, characterized in that open laying of the recess (7) is performed by a dissolving or melting step.

5. The process according to claim 2, characterized in that the transverse webs (6, 6', 6'') are provided with a protective coating (12).

6. The process according to claim 1, characterized in that copper or a copper-containing alloy is used as the material of the conductors (4, 4').

7. The process according to claim 1, characterized in that an optically transmitting glass fiber or fiberglass strand is used as the material of the conductors (4, 4').

8. The process according to claim 7, characterized in that the cut and exposed fiberglass ends upon the exposing thereof are provided with optically transmitting transverse webs positioned in front of the cutting edge (14) of the sheet.

9. The process according to claim 1, characterized in that the substrate film (1') is formed as a polyester sheet (or film) on a polyethyleneterephthalate basis, having a thickness of between 0.05 and 2 mm.

10. The process according to any of the claims 1, 6 or 7, characterized in that the conductor (4, 4') has a yield point of longitudinal expansion lower than that of the substrate sheet (1').

11. The process according to any one of the preceding claims, characterized in that the cutting edge (14) and any transverse webs present are covered by cover strips (15) on at least part of the cutting edge.

**Revendications**

1. Procédé de réalisation d'une vitre de sécurité transparente comportant plusieurs couches, dans laquelle une vitre (10) faisant office de couche de base est assemblée à une feuille de sécurité (1) faite d'une feuille sandwich, constituant une deuxième couche constituée d'une feuille-support transparente (1') et d'une feuille de recouvrement transparente (3), des conducteurs du genre fil (4, 4') qui passent sensiblement sur toute la largeur de la couche, sont disposés parallèlement, en étant écartés les uns des autres, et peuvent servir de boucles conductrices pour un circuit d'alarme, étant emprisonnés entre ces deux feuilles (1'; 3), et des conducteurs étant reliés par paires, cela sur au moins une arête de la deuxième couche, pour former une veine conductrice continue en forme de méandres, caractérisé par les étapes suivantes

a) dans la feuille de sécurité (1), on découpe une pièce s'adaptant à la géométrie de la vitre en verre (10);

b) sur la ou les arêtes de coupe où des conducteurs (4, 4') se terminent avec une section transversale libre, on dégage la feuille jusqu'à une distance d'environ 2 cm de l'arête de coupe, de sorte que les conducteurs (4, 4') sont dénudés et qu'une série d'extrémités de fils (17) déborde, à la manière de franges, au-delà du ou des bords de la feuille;

c) après avoir relié les paires de conducteurs, on colle la deuxième couche sur la couche de base, avec un adhésif.

2. Procédé selon la revendication 1, caractérisé en ce que les conducteurs (4, 4') sont reliés par paires, par des barrettes transversales (6, 6', 6'') conductrices agencées dans la région du côté extérieur.

3. Procédé selon la revendication 1, caractérisé en ce que le dégagement des conducteurs (4, 4') est effectué le long d'une dépression en forme de bande (7) parallèle au bord.

4. Procédé selon la revendication 1 ou 2, caractérisé en ce que le dégagement de la dépression 7 est effectué par fusion ou dissolution.

5. Procédé selon la revendication 2, caractérisé en ce que les barrettes transversales (6, 6', 6'') sont munies d'un revêtement protecteur (12).

6. Procédé selon la revendication 1, caractérisé en ce que le matériau utilisé pour constituer les conducteurs (4, 4') est le cuivre ou un alliage cuivreux.

7. Procédé selon la revendication 1, caractérisé en ce que le matériau utilisè pour constituer les conducteurs est une fibre de verre optiquement conductrice, ou un faisceau de telles fibres.

8. Procédé selon la revendication 7, caractérisé en ce qu'après dégagement les extrémités coupées, ouvertes, de la ou des fibres de verre sont munies de barrettes transversales optiquement conductrices, disposées devant l'arête de coupe (14) de la feuille.

9. Procédé selon la revendication 1, caractérisé en ce que la feuille-support (1') de la feuille (1) est réalisée sous la forme d'un film de polyester à base de polyéthylène-téréphtalate, ayant une épaisseur comprise entre 0,05 et 2 mm.

10. Procédé selon l'une des revendications 1, 6 ou 7, caractérisé en ce que le conducteur (4, 4') possede une limite d'allongement longitudinal plus faible que celle de la feuille-support (1').

11. Procédé selon l'une des revendications précédentes, caractérisé en ce que l'arête de coupe (14) et des barrettes transversales éventuellement présentes sont recouvertes, sur au moins une partie de l'arête de coupe, par des listeaux de recouvrement (15).

# Fig. 1a

# Fig. 1b

Fig. 2

Fig. 3

Fig. 4